# EUROPÄISCHE PATENTSCHRIFT

(11) **EP 1 356 734 B1**
(45) Veröffentlichungstag und Bekanntmachung des Hinweises auf die Patenterteilung: **17.01.2007**
(21) Anmeldenummer: 02009081.7
(22) Anmeldetag: 24.04.2002
(51) Int. Cl.: A21B 1/40, F24B 5/08

(54) **Heizvorrichtung für einen Backofen**
Heating apparatus for a baking oven
Dispositif de chauffage pour un four de cuisson

(43) Veröffentlichungstag der Anmeldung: 29.10.2003
(73) Patentinhaber: Karl-Heinz Häussler GmbH, 88499 Heiligkreuztal (DE)
(72) Erfinder: Häussler, Karl-Heinz, 88499 Heiligkreuztal (DE); Braun, Martin, 73760 Ostfildern (DE)
(74) Vertreter: Kiessling, Christian

(56) Entgegenhaltungen:
- EP-A- 0 456 594
- EP-A- 1 022 512
- DE-A- 10 008 618
- DE-C- 139 367
- DE-C- 695 815
- US-A- 3 882 767

## Beschreibung

Die Erfindung betrifft eine Heizvorrichtung für einen Backofen mit einer Backkammer mit einer verschließbaren Öffnung zum Einbringen und Herausnehmen von Backgut sowie einer mittels einer Feuerungsklappe verschließbaren Einlassöffnung zum Einführen von Heißluft in den Backkammer sowie einer mittels einer Abluftklappe verschließbaren Auslassöffnung zum Herausführen von Heißluft aus dem Backkammer, wobei die Heizvorrichtung einen Verbrennungsraum zum Erzeugen von Heißluft, eine Fördereinrichtung zum Einbringen von schüttfähigem Brennmaterial aus einer Lagereinrichtung in den Verbrennungsraum, eine Zündeinrichtung zum Zünden des Brennmateriales, eine Belüftungseinrichtung zum Zuführen von Frischluft in den Verbrennungsraum sowie einen mittels einer Klappe verschließbaren Bypass zum zusätzlichen Ausleiten von Heißluft aus dem Verbrennungsraum enthält.

Vorrichtungen der eingangs genannten Art sind im Stand der Technik beispielsweise aus DE 100 08 618 A1 bekannt und werden verwendet, bei Holz-Backöfen den Zeitraum zwischen zwei sukzessiven Beschickungen mit Backmaterial gegenüber den herkömmlichen Holz-Backöfen zu verkürzen. Die bekannten Vorrichtungen weisen jedoch den Nachteil auf, dass die Arbeitsabläufe nicht automatisiert und optimiert sind.

Aufgabe der Erfindung ist es deshalb, eine Heizvorrichtung für einen Backofen zu schaffen, mittels derer alle wesentlichen Arbeitsabläufe zum Brotbacken automatisiert und optimiert sind.

Für eine Vorrichtung der eingangs genannten Art wird diese Aufgabe gelöst durch einen Sensor zum Feststellen eines Brennvorganges in dem Verbrennungsraum sowie einer Steuer-Einrichtung, die bei Vorliegen eines Brennvorganges die Feuerungsklappe und die Abluftklappe offen und die Bypassklappe geschlossen hält, ansonsten die Feuerungsklappe und die Abluftklappe geschlossen und die Bypassklappe offen hält und der Sensor im Bereich der Auslassöffnung zum Herausführen von Heißluft aus dem Backkammer vorgesehen ist.

Bevorzugte Ausführungsformen der Erfindung sind Gegenstand der Unteransprüche.

Bei der erfindungsgemäßen Vorrichtung wird durch das Merkmal, dass einen Sensor zum Feststellen eines Brennvorganges in dem Verbrennungsraum sowie einer Steuer-Einrichtung, die bei Vorliegen eines Brennvorganges die Feuerungsklappe und die Abluftklappe offen und die Bypassklappe geschlossen hält, ansonsten die Feuerungsklappe und die Abluftklappe geschlossen und die Bypassklappe offen hält und der Sensor im Bereich der Auslassöffnung zum Herausführen von Heißluft aus dem Backkammer vorgesehen ist, erreicht, dass die Temperatur im Inneren des Backofens kontrolliert steuerbar ist, um einen optimalen Backerfolg zu erlangen.

Gemäß einer ersten bevorzugten Ausführungsform der erfindungsgemäßen Vorrichtung ist vorgesehen, dass der Sensor stromabwärts hinter der Auslassöffnung zum Herausführen von Heißluft aus dem Backkammer vorgesehen. Alternativ kann der Sensor im Bereich der Backkammer oder des Verbrennungsraumes vorgesehen sein.

Gemäß einer wichtigen bevorzugten Ausführungsform der erfindungsgemäßen Vorrichtung ist vorgesehen, dass eine Steuer-Einrichtung vorgesehen ist, die zwischen einem Kaltstart und einem Warmstart des Backofens unterscheidet in der Weise, dass ein Kaltstart festgestellt wird wenn die Temperatur der Abluft auf weniger als 40° bis 80°, insbesondere 60° Celsius bemessen und einen Warmstart feststellt, wenn die Temperatur der Abluft auf über als respektive 40° bis 80°, insbesondere 60° Celsius bemessen ist.

Die Steuer-Einrichtung der erfindungsgemäßen Vorrichtung ist vorzugsweise ausgelegt, um sicherstellen, dass bei Vorliegen eines Kaltstarts der Zeitraum eines Brennvorganges auf etwa 70 min bis 120 min, insbesondere 90 min bemessen ist und bei Vorliegen eines Warmstarts der Zeitraum eines Brennvorganges auf etwa 20 min bis 40 min, insbesondere 30 min bemessen ist.

Darüber ist die Steuer-Einrichtung der erfindungsgemäßen Vorrichtung vorzugsweise ausgelegt, um sicherstellen, dass bei Vorliegen eines Warmstartes die Fördereinrichtung zum Einbringen von schüttfähigem Brennmaterial aus einer Lagereinrichtung in den Verbrennungsraum so gesteuert ist, dass die geförderte Menge Brennmaterials auf etwa 20% bis 30%, insbesondere 25% der bei einem Kaltstart geförderten Menge bemessen ist.

Gemäß einer weiteren bevorzugten Ausführungsform der erfindungsgemäßen Vorrichtung ist vorgesehen, dass eine Sicherungs-Einrichtung vorgesehen ist, die bei einer gemessenen Temperatur von über 450° Celsius des im Bereich der Auslassöffnung vorgesehenen Sensors die Leistung der Fördereinrichtung zum Einbringen von schüttfähigem Brennmaterial aus einer Lagereinrichtung in den Verbrennungsraum mittels einer Steuereinrichtung auf die Hälfte reduzierbar ist.

Die Zündeinrichtung zum Zünden des Brennmateriales ist vorzugsweise von einem elektrischen Heizdraht gebildet.

Die erfindungsgemäße Vorrichtung enthält des Weiteren vorzugsweise eine Steuerungseinrichtung, die sicherstellt, dass die Zündeinrichtung zum Zünden des Brennmateriales bei einer gemessenen Temperatur von unter 80° bis 160°, insbesondere 120° Celsius des im Bereich der Auslassöffnung vorgesehenen Sensors aktiviert ist und bei einer gemessenen Temperatur von über respektive 80° bis 160°, insbesondere 120° Celsius des im Bereich der Auslassöffnung vorgesehenen Sensors deaktiviert ist.

Die erfindungsgemäße Vorrichtung wird im Folgenden anhand einer bevorzugten Ausführungsform erläutert, die in den Figuren der Zeichnung dargestellt ist. Darin zeigen:
- Fig. 1: eine bevorzugte Ausführungsform eines mit der erfindungsgemäßen Heizvorrichtung versehenen Backofens in einer Querschnittsansicht;
- Fig. 2: die in Fig. 1 dargestellte erfindungsgemäße Heizvorrichtung in einer Querschnittsansicht.

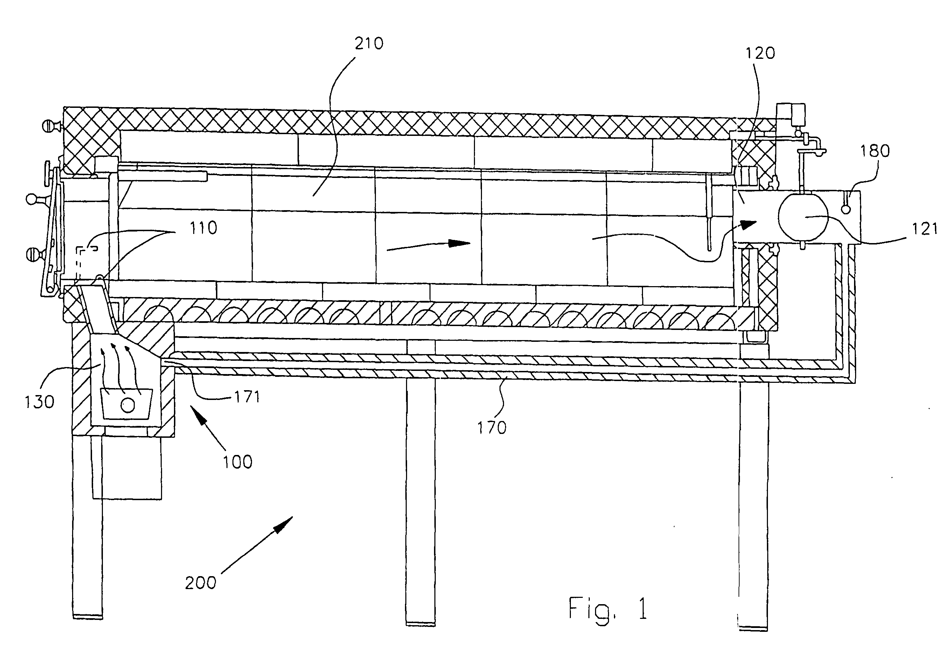

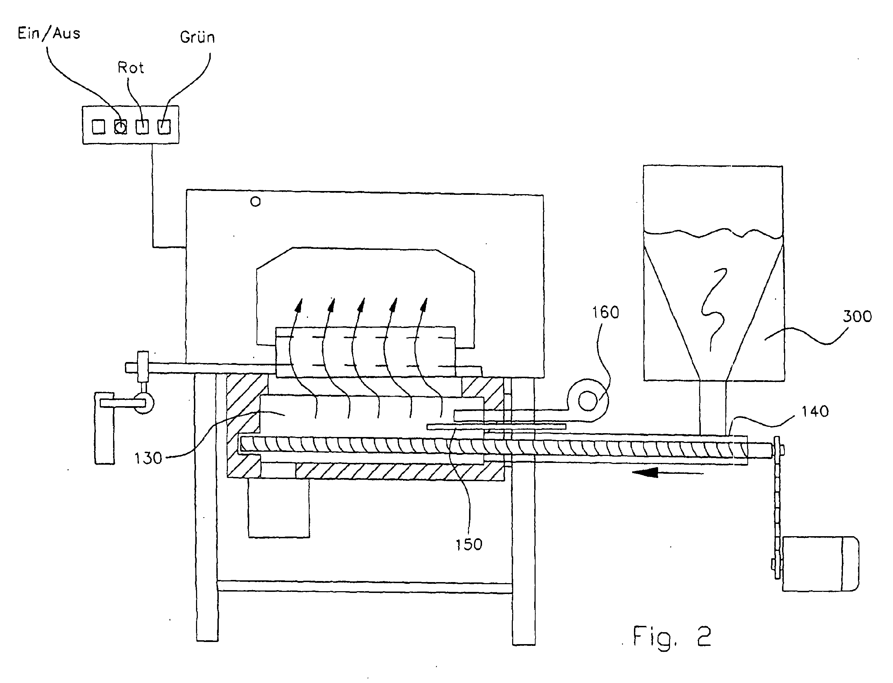

Die in den Figuren 1 und 2 dargestellte erfindungsgemäße Heizvorrichtung 100 für eine Backofen Vorrichtung 200 mit einer Backkammer 210 mit einer verschließbaren Öffnung 220 zum Einbringen und Herausnehmen von Backgut, einer mittels einer Feuerungsklappe 110 verschließbaren Einlassöffnung zum Einführen von Heißluft in die Backkammer 210 sowie eine mittels einer Abluftklappe 121 verschließbaren Auslassöffnung 120 zum Herausführen von Heißluft aus dem Backkammer 210, enthält einen Verbrennungsraum 130 zum Erzeugen von Heißluft, eine Fördereinrichtung 140 zum Einbringen von schüttfähigem Brennmaterial aus einer Lagereinrichtung 300 in den Verbrennungsraum 130, eine Zündeinrichtung 150 zum Zünden des Brennmateriales, eine Belüftungseinrichtung 160 zum Zuführen von Frischluft in den Verbrennungsraum sowie einen mittels einer Klappe 171 verschließbaren Bypass 170 zum zusätzlichen Ausleiten von Heißluft aus dem Verbrennungsraum. Die Heizvorrichtung 100 enthält erfindungswesentlich einen Sensor 180 zum Feststellen eines Brennvorganges in dem Verbrennungsraum 130 sowie eine nicht dargestellte elektronische Steuer-Einrichtung, die bei Vorliegen eines Brennvorganges die Feuerungsklappe 110 und die Abluftklappe 121 offen und die Bypassklappe 171 geschlossen hält, ansonsten die Feuerungsklappe 110 und die Abluftklappe 121 geschlossen und die Bypassklappe 171 offen hält.

Der Bypass 170 ist vorgesehen, um bei abgeschalterer Heizvorrichtung 100 durch Nachschwelen des Brenngutes verursachte Restheißluft am Backraum vorbei in einem im Bereich der Auslassöffnung 120 angeordneten Abgasabzug zu geleiten.

Der Sensor 180 ist im Bereich der Auslassöffnung 120 zum Herausführen von Heißluft aus dem Backkammer 210 vorgesehen und ist in der dargestellten Ausführungsform stromabwärts hinter der Auslassöffnung zum Herausführen von Heißluft aus dem Backkammer 210 angeordnet.

Des weiteren ist eine nicht dargestellte elektronische Einrichtung vorgesehen, die zwischen einem Kaltstart und einem Warmstart des Backofens unterscheidet in der Weise, dass ein Kaltstart festgestellt wird wenn die Temperatur der Abluft auf weniger als 60° Celsius bemessen und einen Warmstart feststellt, wenn die Temperatur der Abluft auf über als 60° Celsius bemessen ist. Die erfindungsgemäße Vorrichtung 100 enthält eine nicht dargestellte elektronische Steuerungseinrichtung, die sicherstellt, dass bei Vorliegen eines Kaltstarts der Zeitraum eines Brennvorganges auf etwa 90 min bemessen ist. Bei Vorliegen eines Warmstartes ist der Zeitraum eines Brennvorganges mittels dieser Steuerungseinrichtung auf etwa 30 min bemessen ist.

Bei Vorliegen eines Warmstartes ist die Fördereinrichtung 140 zum Einbringen von schüttfähigem Brennmaterial 141 aus einer Lagereinrichtung 300 in den Verbrennungsraum 130 mittels einer weiteren nicht dargestellten elektronischen Steuereinrichtung so gesteuert, dass die geförderte Menge Brennmaterials auf etwa 25% der bei einem Kaltstart geförderten Menge bemessen ist.

Die erfindungsgemäße Vorrichtung 100 enthält des weiteren eine nicht dargestellte elektronische Sicherungs-Einrichtung, die bei einer gemessenen Temperatur von über 450° Celsius des im Bereich der Auslassöffnung 120 vorgesehenen Sensors 180 die Leistung der Fördereinrichtung 140 zum Einbringen von schüttfähigem Brennmaterial 141 aus einer Lagereinrichtung 300 in den Verbrennungsraum 130 um die Hälfte reduziert.

Die Zündeinrichtung 150 zum Zünden des Brennmateriales ist von einem elektrischen Heizdraht gebildet, wobei die Zündeinrichtung 150 von einer entsprechenden nicht dargestellten Steuerungseinrichtung bei einer gemessenen Temperatur von unter 120° Celsius des im Bereich der Auslassöffnung 120 vorgesehenen Sensors 180 aktiviert ist und bei einer gemessenen Temperatur von über 120° Celsius des im Bereich der Auslassöffnung 120 vorgesehenen Sensors 180 deaktiviert ist.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Heizvorrichtung (100) für einen Backofen (200) mit einer Backkammer (210) mit einer verschließbaren Öffnung (220) zum Einbringen und Herausnehmen von Backgut sowie einer mittels einer Feuerungsklappe (110) verschließbaren Einlassöffnung zum Einführen von Heißluft in die Backkammer (210) sowie einer mittels einer Abluftklappe (121) verschließbaren Auslassöffnung (120) zum Herausführen von Heißluft aus dem Backkammer (210), wobei die Heizvorrichtung (100) einen Verbrennungsraum (130) zum Erzeugen von Heißluft, eine Fördereinrichtung (140) zum Einbringen von schüttfähigem Brennmaterial (141) aus einer Lagereinrichtung (300) in den Verbrennungsraum (130), eine Zündeinrichtung (150) zum Zünden des Brennmateriales (141), eine Belüftungseinrichtung (160) zum Zuführen von Frischluft in den Verbrennungsraum (130) sowie einen mittels einer Klappe (171) verschließbaren Bypass (170) zum zusätzlichen Ausleiten von Heißluft aus dem Verbrennungsraum (130) enthält, **gekennzeichnet durch** einen Sensor (180) zum Feststellen eines Brennvorganges in dem Verbrennungsraum (130), sowie einer Steuer-Einrichtung, die bei Vorliegen eines Brennvorganges die Feuerungsklappe (110) und die Abluftklappe (121) offen und die Bypassklappe (171) geschlossen hält, ansonsten die Feuerungsklappe (110) und die Abluftklappe (171) geschlossen und die Bypassklappe (171) offen hält und der Sensor (180) im Bereich der Auslassöffnung (120) zum Herausführen von Heißluft aus dem Backkammer (210) vorgesehen ist.

2. Vorrichtung nach Anspruch 1, **dadurch gekennzeichnet, dass** der Sensor (180) stromabwärts hinter der Auslassöffnung (120) zum Herausführen von Heißluft aus dem Backkammer (120) vorgesehen ist.

3. Vorrichtung nach Anspruch 1, **dadurch gekennzeichnet, dass** der Sensor (180) im Bereich der Backkammer (120) vorgesehen ist.

4. Vorrichtung nach Anspruch 1, **dadurch gekennzeichnet, dass** der Sensor (180) im Bereich des Verbrennungsraumes (130) vorgesehen ist.

5. Vorrichtung nach einem der vorhergehenden Ansprüche, **dadurch gekennzeichnet, dass** die Steuer-Einrichtung zwischen einem Kaltstart und einem Warmstart des Backofens (200) unterscheidet in der Weise, dass ein Kaltstart festgestellt wird wenn die Temperatur der Abluft auf weniger als 40° bis 80° Celsius bemessen und einen Warmstart feststellt, wenn die Temperatur der Abluft auf respektive über 40° bis 80° Celsius bemessen ist.

6. Vorrichtung nach Anspruch 5, **dadurch gekennzeichnet, dass** die Steuer-Einrichtung einen Kaltstart feststellt, wenn die Temperatur der Abluft auf weniger als etwa 60° Celsius bemessen und einen Warmstart feststellt, wenn die Temperatur der Abluft auf respektive über etwa 60° Celsius bemessen ist.

7. Vorrichtung nach einem der Ansprüche 5 oder 6, **dadurch gekennzeichnet, dass** bei Vorliegen eines Kaltstarts der Zeitraum eines Brennvorganges auf etwa 70 min bis 120 min bemessen ist.

8. Vorrichtung nach Anspruch 7, **dadurch gekennzeichnet, dass** bei Vorliegen eines Kaltstarts der Zeitraum eines Brennvorganges auf etwa 90 min bemessen ist.

9. Vorrichtung nach einem der Ansprüche 5 bis 8, **dadurch gekennzeichnet, dass** bei Vorliegen eines Warmstarts der Zeitraum eines Brennvorganges auf etwa 20 min bis 40 min bemessen ist.

10. Vorrichtung nach Anspruch 9, **dadurch gekennzeichnet, dass** bei Vorliegen eines Warmstarts der Zeitraum eines Brennvorganges auf etwa 30 min bemessen ist.

11. Vorrichtung nach einem der Ansprüche 5 bis 10, **dadurch gekennzeichnet, dass** bei Vorliegen eines Warmstarts die Fördereinrichtung (140) zum Einbringen von schüttfähigem Brennmaterial (141) aus einer Lagereinrichtung in den Verbrennungsraum (130) mittels der Steuer-Einrichtung so gesteuert ist, dass die geförderte Menge Brennmaterials (141) auf etwa 20% bis 30% der bei einem Kaltstart geförderten Menge bemessen ist.

12. Vorrichtung nach Anspruch 11, **dadurch gekennzeichnet, dass** die geförderte Menge Brennmaterials (141) auf etwa 25% der bei einem Kaltstart geförderten Menge bemessen ist.

13. Vorrichtung nach einem der vorhergehenden Ansprüche, **dadurch gekennzeichnet, dass** die Steuerungs-Einrichtung bei einer gemessenen Temperatur von über 450° Celsius des im Bereich der Auslassöffnung (120) vorgesehenen Sensors die Fördereinrichtung (140) zum Einbringen von schüttfähigem Brennmaterial (141) aus einer Lagereinrichtung in den Verbrennungsraum (130) so steuert, dass ihre Förderleistung auf die Hälfte reduziert ist.

14. Vorrichtung nach einem der vorhergehenden Ansprüche, **dadurch gekennzeichnet, dass** die Zündeinrichtung (150) zum Zünden des Brennmateriales (141) von einem elektrischen Heizdraht gebildet ist.

15. Vorrichtung nach einem der vorhergehenden Ansprüche, **dadurch gekennzeichnet, dass** die Zündeinrichtung (150) zum Zünden des Brennmateriales (141) bei einer gemessenen Temperatur von unter 80° bis 160° Celsius des im Bereich der Auslassöffnung (120) vorgesehenen Sensors (180) aktiviert ist und bei einer gemessenen Temperatur von über respektive 80° bis 160° Celsius des im Bereich der Auslassöffnung (120) vorgesehenen Sensors (180) deaktiviert ist.

16. Vorrichtung nach Anspruch 15, **dadurch gekennzeichnet, dass** die Zündeinrichtung (150) zum Zünden des Brennmateriales (141) bei einer gemessenen Temperatur 120° Celsius des im Bereich der Auslassöffnung (120) vorgesehenen Sensors (180) aktiviert ist und bei einer gemessenen Temperatur von über 120° Celsius des im Bereich der Auslassöffnung (120) vorgesehenen Sensors (180) deaktiviert ist.

## Claims

1. A heating system (100) for an oven (200) having a baking chamber (210) with a closeable opening (220) for the introduction and removal of baking goods, and an air inlet slot which can be closed by means of an air inlet damper (110) and which is adapted to allow hot air to be passed into the baking chamber (210), and an air outlet slot (120) which can be closed by means of an air outlet damper (121) and which is adapted to allow hot air to escape from said baking chamber (210), wherein said heating system (100) has a combustion chamber (130) for the production of hot air, a conveyor (140) for the introduction of free-flowing fuel (141) from storage means (300) into said combustion chamber (130), an igniter (150) for igniting the fuel (141), an aerator (160) for feeding fresh air into the combustion chamber (130), and a bypass (170) which can be closed by means of a damper (171) and which is adapted for supplementary removal of hot air from said combustion chamber (130), **characterized by** a sensor (180) for the detection of a burning process in the combustion chamber (130), and control equipment which keeps said air inlet damper (110) and said air outlet damper (121) open and said bypass damper (171) closed when fuel is burning, but otherwise keeps said air inlet damper (110) and said air outlet damper (171) closed and said bypass damper (171) open, said sensor (180) being disposed in the region of said air outlet slot (120) adapted to allow hot air to escape from said baking chamber (210).

2. A system as defined in claim 1, **characterized in that** said sensor (180) is disposed downstream of said air outlet slot (120) adapted to allow hot air to escape from said baking chamber (120).

3. A system as defined in claim 1, **characterized in that** said sensor (180) is disposed in the region of said baking chamber (120).

4. A system as defined in claim 1, **characterized in that** said sensor (180) is disposed in the region of said combustion chamber (130).

5. A system as defined in any one of the previous claims, **characterized in that** said control equipment differentiates between a cold start and a warm start of the oven (200) **in that** a cold start is detected when the temperature of the exhaust air is found to be below from 40° to 80°C and a warm start is detected when the temperature of the exhaust air is found to be above from 40° to 80° C, respectively.

6. A system as defined in claim 5, **characterized in that** said control equipment detects a cold start when the temperature of the exhaust air is found to be below approximately 60° C and a warm start when the temperature of the exhaust air is found to be above approximately 60° C, respectively.

7. A system as defined in claim 5 or claim 6, **characterized in that** when a cold start is detected the duration of the burning process is restricted to approximately 70 minutes to 120 minutes.

8. A system as defined in claim 7, **characterized in that** when a cold start is detected the duration of the burning process is restricted to approximately 90 minutes.

9. A system as defined in any one of claims 5 to 8, **characterized in that** when a warm start is detected the duration of the burning process is restricted to approximately from 20 minutes to 40 minutes.

10. A system as defined in claim 9, **characterized in that** when a warm start is detected the duration of the burning process is restricted to approximately 30 minutes.

11. A system as defined in any one of claims 5 to 10, **characterized in that** when a warm start is detected, said conveyor (140) for the introduction of free-flowing fuel (141) from storage means into the combustion chamber (130) is controlled by means of control equipment (141) such that the fuel delivery rate is restricted to approximately from 20 % to 30 % of the fuel delivery rate used in the case of a cold start.

12. A system as defined in claim 11, **characterized in that** the rate of delivery of the fuel (141) is restricted to approximately 25 % of that used in the case of a cold start.

13. A system as defined in any one of the previous claims, **characterized in that** when said sensor disposed in the region of the air outlet slot (120) detects a temperature of above 450 °C, said control device controls the conveyor (140) for introducing free-flowing fuel (141) from storage means into the combustion chamber (130) such that the delivery rate of said fuel is reduced by one half.

14. A system as defined in any one of the previous claims, **characterized in that** the igniter (150) adapted to ignite the fuel (141) is composed of an electric heating element.

15. A system as defined in any one of the previous claims, **characterized in that** the igniter (150) adapted to ignite the fuel (141) is activated when the temperature detected by said sensor (180) disposed in the region of said air outlet slot (120) is below from 80 ° to 160 °C and is deactivated when the temperature detected by said sensor (180) disposed in the region of said air outlet slot (120) is above from 80 ° to 160 °C.

16. A system as defined in claim 15, **characterized in that** said igniter (150) adapted to ignite the fuel (141) is activated when the temperature detected by said sensor (180) disposed in the region of said air outlet slot (120) is below 120 °C and is deactivated when the temperature detected by said sensor (180) disposed in the region of said air outlet slot (120) is above 120 °C.

## Revendications

1. Dispositif de chauffage (100) pour les fours de boulanger (200) comprenant une chambre de cuisson (210) avec une ouverture fermant (220) permettant d'introduire et de sortir les produits de boulangerie et avec une ouverture d'entrée fermant par une porte de foyer (110), permettant l'introduction d'air chaud dans la chambre de cuisson (210), et avec une ouverture de sortie (120) fermant par une porte d'évacuation d'air (121), pour l'évacuation de l'air chaud de la chambre de cuisson (210), le dispositif de chauffage (100) comprenant une chambre de combustion (130) pour produire de l'air chaud, un convoyeur (140) servant à charger des matériaux de chauffage appropriés à être jetés (141) à partir d'un dispositif d'entrepôt (300) dans la chambre de combustion (130), un dispositif d'allumage (150) servant à mettre le feu aux matériaux de chauffage (141), un dispositif d'aération (160) permettant d'amener de l'air frais dans la chambre de combustion (130) ainsi qu'une conduite de dérivation (170) fermant au moyen d'une trappe (171) pour l'évacuation supplémentaire d'air chaud de la chambre de combustion (130),
**caractérisé par** un capteur (180) permettant de constater un état de combustion dans la chambre de combustion (130) ainsi que par un dispositif de commande qui, en état de combustion, maintient ouvertes la porte de foyer (110) et la porte d'évacuation d'air (121) et maintient fermée la trappe de dérivation (171) et dans l'autre cas maintient fermées la porte de foyer (110) et la porte d'évacuation d'air (121) et maintient ouverte la trappe de dérivation (171), et en ce que le capteur (180) est prévu au niveau de l'ouverture de sortie (120) pour l'évacuation de l'air chaud de la chambre de cuisson (210).

2. Dispositif selon la revendication 1,
**caractérisé en ce que** le capteur (180) est disposé en aval de l'ouverture de sortie (120) pour l'évacuation de l'air chaud de la chambre de cuisson (210).

3. Dispositif selon la revendication 1,
**caractérisé en ce que** le capteur (180) est disposé au niveau de la chambre de cuisson (210).

4. Dispositif selon la revendication 1,
**caractérisé en ce que** le capteur (180) est disposé au niveau de la chambre de combustion (130).

5. Dispositif selon l'une quelconque des revendications précédentes,
**caractérisé en ce que** le dispositif de commande fait la distinction entre un amorçage à froid et un amorçage à chaud du four (200), de façon qu'il constate un amorçage à froid lorsque la température de l'air sortant est inférieure à 40° C - 80° C, et qu'il constate un amorçage à chaud lorsque la température de l'air sortant est supérieure à 40° C - 80° C.

6. Dispositif selon la revendication 5,
**caractérisé en ce que** le dispositif de commande constate un amorçage à froid lorsque la température de l'air sortant est inférieure à environ 60° C, et qu'il constate un amorçage à chaud lorsque la température de l'air sortant est supérieure à environ 60° C.

7. Dispositif selon l'une des revendications 5 ou 6,
**caractérisé en ce que** dans le cas d'un amorçage à froid, la durée d'une opération de combustion est réglée à environ 70 min à 120 min.

8. Dispositif selon la revendication 7,
**caractérisé en ce que** dans le cas d'un amorçage à froid, la durée d'une opération de combustion est réglée à environ 90 min.

9. Dispositif selon l'une des revendications 5 à 8,
**caractérisé en ce que** dans le cas d'un amorçage à chaud, la durée d'une opération de combustion est réglée à environ 20 min à 40 min.

10. Dispositif selon la revendication 9,
**caractérisé en ce que** dans le cas d'un amorçage à chaud, la durée d'une opération de combustion est réglée à environ 30 min.

11. Dispositif selon l'une des revendications 5 à 10,
**caractérisé en ce que** dans le cas d'un amorçage à chaud, le convoyeur (140) servant à charger des matériaux de chauffage appropriés à être jetés (141) à partir d'un dispositif d'entrepôt dans la chambre de combustion (130) est commandé de façon à ce que la quantité des matériaux de chauffage (141) transportée est réglée à environ 20% à 30% de la quantité transportée dans le cas d'un amorçage à froid.

12. Dispositif selon la revendication 11,
**caractérisé en ce que** la quantité des matériaux de chauffage (141) transportée est réglée à environ 25% de la quantité transportée dans le cas d'un amorçage à froid.

13. Dispositif selon l'une quelconque des revendications précédentes,
**caractérisé en ce que** le convoyeur (140) servant à charger des matériaux de chauffage appropriés à être jetés (141) à partir d'un dispositif d'entrepôt dans la chambre de combustion (130) est commandé par le dispositif de commande, dans le cas d'une température de plus de 450° C mesurée par le capteur prévu au niveau de l'ouverture de sortie (120), de façon à réduire son rendement à la moitié.

14. Dispositif selon l'une quelconque des revendications précédentes,
**caractérisé en ce que** le dispositif d'allumage (150) servant à mettre le feu aux matériaux de chauffage (141) est constitué par un fil de chauffage électrique.

15. Dispositif selon l'une quelconque des revendications précédentes,
**caractérisé en ce que** le dispositif d'allumage (150) servant à mettre le feu aux matériaux de chauffage (141) est activé dans le cas d'une température de moins de 80° à 160° C mesurée par le capteur (180) prévu au niveau de l'ouverture de sortie (120), et qu'il est désactivé dans le cas d'une température de plus de respectivement 80° à 160° C mesurée par le capteur prévu au niveau de l'ouverture de sortie (120).

16. Dispositif selon la revendication 15,
**caractérisé en ce que** le dispositif d'allumage (150) servant à mettre le feu aux matériaux de chauffage (141) est activé dans le cas d'une température de moins de 120° C mesurée par le capteur (180) prévu au niveau de l'ouverture de sortie (120), et qu'il est désactivé dans le cas d'une température de plus de 120° C mesurée par le capteur (180) prévu au niveau de l'ouverture de sortie (120).
